Europäisches Patentamt

European Patent Office

Office européen des brevets

(19)

(11) Veröffentlichungsnummer: **0 512 333 B1**

(12) **EUROPÄISCHE PATENTSCHRIFT**

(45) Veröffentlichungstag der Patentschrift: **28.06.95**

(51) Int. Cl.6: **C08F 285/00**, //(C08F285/, 220:18)

(21) Anmeldenummer: **92106988.6**

(22) Anmeldetag: **24.04.92**

(54) **Emulsionspfropfcopolymerisate.**

(30) Priorität: **04.05.91 DE 4114641**

(43) Veröffentlichungstag der Anmeldung:
**11.11.92 Patentblatt 92/46**

(45) Bekanntmachung des Hinweises auf die Patenterteilung:
**28.06.95 Patentblatt 95/26**

(84) Benannte Vertragsstaaten:
**BE DE FR GB IT NL**

(56) Entgegenhaltungen:
**EP-A- 0 095 769**
**DE-A- 2 253 689**
**US-A- 4 180 529**

**CHEMICAL ABSTRACTS, vol. 102, no. 16, April 1985, Columbus, Ohio, US; abstract no. 132950U, 'IMPACT-RESISTANT ACRYLIC CO-POLYMERS' Seite 34 ;Spalte 2 ;**

(73) Patentinhaber: **BASF Aktiengesellschaft**
**Carl-Bosch-Strasse 38**
**D-67063 Ludwigshafen (DE)**

(72) Erfinder: **Besecke, Siegmund, Dr., p.A. Erich Besecke**
**Niborgstrasse 11**
**W-3250 Hameln (DE)**
Erfinder: **Wagner, Daniel, Dr.**
**Im Roehrich 67**
**W-6702 Bad Duerkheim (DE)**
Erfinder: **Schoen, Wilfried**
**Posener Strasse 4**
**W-6507 Ingelheim (DE)**
Erfinder: **Endlich, Karl-Ludwig**
**Sackgaesschen 2**
**W-6500 Mainz (DE)**

EP 0 512 333 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die vorliegende Erfindung betrifft Emulsionspfropfcopolymerisate, aufgebaut aus
a) 2 bis 10 Gew.-% eines Kerns aus
    80 bis 99,99 Gew.-% Methylmethacrylat (I),
    0,01 bis 5 Gew.-% Allylmethacrylat (II),
    0 bis 19,99 Gew.-% weiteren monofunktionellen Comonomeren (III) und
    0 bis 3 Gew.-% weiteren di- oder polyfunktionellen Comonomeren (IV),
b) 15 bis 50 Gew.-% einer ersten Schale aus
    60 bis 89,99 Gew.-% eines Acrylsäure-$C_1$-$C_{20}$-alkylesters (V),
    10 bis 39,99 Gew.-% eines vinylaromatischen Monomeren (VI),
    0,01 bis 5 Gew.-% II,
    0 bis 10 Gew.-% I und/oder III,
    0 bis 3 Gew.-% IV,
c) 5 bis 20 Gew.-% einer zweiten Schale in einer unter (a) angegebenen Zusammensetzung,
d) 15 bis 50 Gew.-% einer dritten Schale in einer unter (b) angegebenen Zusammensetzung,
e) 15 bis 30 Gew.-% einer vierten Schale aus
    80 bis 99,95 Gew.-% I,
    0,05 bis 2 Gew.-% eines Reglers (VII) und
    0 bis 19,95 Gew.-% III,
mit der Maßgabe, daß die Summe der Anteile der Schalen (b) und (d) 50 bis 75 Gew.-% beträgt.

Außerdem betrifft die Erfindung ein Verfahren zur Herstellung dieser Emulsionspfropfcopolymerisate sowie deren Verwendung als Zusätze zur Erhöhung der Schlagzähigkeit von thermoplastischen Massen.

Ferner betrifft die Erfindung Formkörper und Flächengebilde aus diesen thermoplastischen Massen.

Emulsionspfropfcopolymerisate auf der Basis von Vinylmonomeren sind allgemein bekannt und finden für sich allein, besonders aber als Zusatzstoffe in Kunststoffen wie Homo- und Copolymerisaten auf Acrylat- und Methacrylatbasis Anwendung. Ihr Zusatz bewirkt eine Verbesserung der Schlagzähigkeit derartiger Acrylatharze, die beispielsweise zu Formkörpern, Platten, Folien und organischen Gläsern (Acrylglas) verarbeitet werden können. Die anderen wichtigen Grundeigenschaften von Acrylatharzen, wie hohe Lichtdurchlässigkeit und Klarheit, witterungsbeständigkeit, Wärmeformbeständigkeit und mechanische Festigkeit können jedoch durch diese Zusätze beeinträchtig werden. Daher ist man allgemein bestrebt, durch Emulsionspfropfcopolymerisate mit einem mehrschaligen Aufbau und spezieller Zusammensetzung die unerwünschten Eigenschaftsveränderungen so gering wie möglich zu halten oder - wenn möglich - nicht auftreten zu lassen und dabei gleichzeitig eine Steigerung der Schlagzähigkeit zu erzielen.

Aus der DE-A 22 53 689 sind mehrstufige Emulsionspfropfcopolymerisate bekannt. Die dort näher beschriebenen Polymerisate sind dreistufig - also aus einem Kern sowie aus einer ersten und einer zweiten Pfropfhülle - aufgebaut, wobei Kern und zweite Hülle aus einem harten, nicht elastomeren Polymerisat und die erste Hülle aus einem elastomeren Polymerisat bestehen. Ferner wird in dieser DE-A auf die Möglichkeit eines mehrstufigen Aufbaus der Pfropfpolymerisate aus alternierend harten und elastomeren Phasen hingewiesen (Spalte 13, 2. Absatz). Speziell werden als fünfstufige Pfropfpolymerisate (Beispiele 15 und 17) solche mit einem Kernanteil von rund 20 Gew.-% beschrieben. Als Monomere für den Kern und die harten Schalen werden u.a. Methylmethacrylat, $\alpha$-Methylstyrol, Styrol und Acrylnitril genannt, und für die elastomeren Schalen dienen vornehmlich Butadien und Butylacrylat. Weiterhin können sowohl der Kern als auch die harten und elastomeren Schalen noch aus polyfunktionellen Vernetzern wie Allylmethacrylat, Diallylmaleat, Alkylenglycoldimethacrylaten und -diacrylaten, Divinylbenzol oder Trivinylbenzol aufgebaut sein.

Diese Polymerisate dienen als Zusätze zu thermoplastischen Kunststoffen wie hauptsächlich Acrylatharzen, um deren Schlagzähigkeit zu erhöhen. Wenn dieser Zweck auch befriedigend erfüllt wird, so geht dieses häufig auf Kosten der Beeinträchtigung anderer wichtiger mechanischer, thermischer und optischer Eigenschaften, z.B. der Zugfestigkeit, der Wärmeformbeständigkeit und der Lichtdurchlässigkeit.

Der vorliegenden Erfindung lagen daher Emulsionspfropfcopolymerisate als Schlagzähigkeitsverbesserer für thermoplastische Massen als Aufgabe zugrunde, die diesen Massen eine hohe Schlagzähigkeit verleihen, ohne gleichzeitig die sonstigen Eigenschaften wesentlich zu beeinträchtigen.

Demgemäß wurden die eingangs definierten Polymerisate gefunden.

Weiterhin wurde ein Verfahren zu deren Herstellung, deren Verwendung als Zusätze zur Erhöhung der Schlagzähigkeit von thermoplastischen Massen sowie Formkörper und Flächengebilde aus diesen thermoplastischen Massen gefunden.

Die erfindungsgemäßen Emulsionspfropfcopolymerisate sind fünfstufig aus einem harten, nicht elastomeren Kern (a), einer elastomeren, ersten Schale (b), einer harten, nicht elastomeren, zweiten Schale (c), einer elastomeren, dritten Schale (d) und schließlich aus einer äußeren, harten, nicht elastomeren, vierten Schale (e) aufgebaut, wobei die einzelnen Stufen in folgenden Mengen vorhanden sind:

2 bis 10 Gew.-%, bevorzugt 2 bis 6 Gew.-% des Kernes (a),

15 bis 50 Gew.-%, bevorzugt 20 bis 45 Gew.-% der ersten Schale (b),

5 bis 20 Gew.-%, bevorzugt 5 bis 15 Gew.-% der zweiten Schale (c),

15 bis 50 Gew.-%, bevorzugt 20 bis 45 Gew.-% der dritten Schale (d) und

15 bis 30 Gew.-%, bevorzugt 15 bis 25 Gew.-% der vierten Schale (e),

mit der Maßgabe, daß die Summe der Anteile der Schalen (b) und (d) 50 bis 75 Gew.-%, bevorzugt 60 bis 75 Gew.-%, beträgt.

Die jeweiligen prozentualen Angaben beziehen sich auf das Gesamtgewicht des fünfstufigen Pfropfcopolymerisates.

Der harte Kern (a) des Emulsionspfropfcopolymerisates besteht aus

80 bis 99,99 Gew.-%, vorzugsweise 90 bis 98,99 Gew.-% Methylmethacrylat (I),

0,01 bis 5 Gew.-% Allylmethacrylat (II),

0 bis 19,99 Gew.-%, vorzugsweise 1 bis 9,99 Gew.-% weiteren monofunktionellen Comonomeren (III) und

0 bis 3 Gew.-% weiteren di- oder polyfunktionellen Comonomeren (IV).

Als monofunktionelle Comonomere (III) seien

Acrylsäure-$C_1$-$C_{20}$-alkylester und -$C_5$-$C_{12}$-cycloalkylester,

Methacrylsäure-$C_2$-$C_{20}$-alkylester und -$C_5$-$C_{12}$-cycloalkylester,

Acryl- und Methacrylnitril,

Acryl- und Methacrylamid sowie deren

N-Alkyl- und Dialkylderivate mit $C_1$-$C_{20}$-Alkylgruppen,

Vinylester von aliphatischen $C_2$-$C_8$-Carbonsäuren wie Vinylacetat,

Vinylaromaten wie Styrol, $\alpha$-Methylstyrol und Vinyltoluol,

Vinylhalogenide wie Vinylchlorid und Vinylidenchlorid

sowie Mischungen dieser Monomeren genannt.

Als Comonomere (III) sind Acrylsäure-$C_1$-$C_8$-alkylester bevorzugt, insbesondere Acrylsäureethylester, die vorzugsweise in einer Menge von 1 bis 6 Gew.-% im Polymerisat des Kerns enthalten sind.

Die Comonomeren (III) dienen hauptsächlich zur Verbesserung der thermischen Stabilität der Pfropfcopolymerisate.

Als di- oder polyfunktionelle Comonomere (IV) seien

Alkylenglycoldiacrylate wie Ethylenglycoldiacrylat, Propylenglycoldiacrylat, 1,3-Butylenglycoldiacrylat und 1,4-Butylenglycoldiacrylat,

Alkylenglycoldimethacrylate wie Ethylenglycoldimethacrylat, Propylenglycoldimethacrylat, 1,3-Butylenglycoldimethacrylat und 1,4-Butylenglycoldimethacrylat,

Acrylate und Methacrylate von Glycerin, Trimethylolpropan, Pentaerythrit, Inosit und ähnliche Zuckeralkohole,

Acryl- und Methacrylamide von Ethylendiamin und andere aliphatische Di- und Polyamine,

Triacryl- und Trimethacrylamide,

Triallylcyanurat und Triallylisocyanurat sowie

Vinylbenzole wie Divinylbenzol und Trivinylbenzol genannt.

Die Comonomeren (IV) dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Die Comonomeren (IV) können bis zu 3 Gew.-% im Kernpolymerisat enthalten sein, vorzugsweise verwendet man sie jedoch nicht mit oder nur in Mengen von 0,1 bis 0,5 Gew.-%.

Im Gegensatz hierzu ist die Verwendung eines zweiten Vernetzertyps, der auch als "Pfropfvernetzer" bezeichnet wird, wesentlich.

Als pfropfaktives Comonomeres ist Allylmethacrylat (II) mit 0,01 bis 5 Gew.-% am Aufbau des Kernes beteiligt, wobei sich die Menge nach der gewünschten Kerngröße richtet. Bei einer bevorzugten Kerngröße von 40 bis 140 nm beträgt der Anteil an Allylmethacrylat 0,1 bis 0,5 Gew.-%.

Pfropfaktive Comonomere sorgen für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Das Kernmaterial hat eine Glastemperatur von mehr als 50°C, die vorzugsweise im Bereich von 80 bis 130°C liegt.

In der zweiten Polymerisationsstufe wird in Gegenwart des Emulsionspolymerisats des Kerns, auch "Kernlatex" oder "Saatlatex" genannt, ein Monomerengemisch aus

60 bis 89,99 Gew.-%, vorzugsweise 70 bis 89,99 Gew.-% eines Acrylsäure-$C_1$-$C_{20}$-alkylesters (V),

10 bis 39,99 Gew.-%, vorzugsweise 10 bis 29,99 Gew.-% eines vinylaromatischen Monomeren (VI),

0,01 bis 5 Gew.-%, vorzugsweise 0,1 bis 5 Gew.-% II,

0 bis 10 Gew.-% I und/oder III und

0 bis 3 Gew.-% IV

polymerisiert, welches die erste elastomere Schale (b) des fünfstufigen Emulsionspfropfcopolymerisates bildet.

Unter den Acrylsäure-$C_1$-$C_{20}$-alkylestern (V) sind die $C_2$-$C_{10}$-Alkylester bevorzugt, wobei Butylacrylat und 2-Ethylhexylacrylat besonders bevorzugt sind.

Als vinylaromatische Monomere (VI) eignen sich

Styrol

$\alpha$-Methylstyrol,

t-Butylstyrol,

Monochlorstyrol,

Vinyltoluol und

Acryl- und Methacrylsäurephenylester.

Die vinylaromatischen Monomeren (VI), insbesondere Styrol, sind von besonderer Bedeutung, da sie den Brechungsindex erhöhen. Auf diese Weise läßt er sich an denjenigen der Kernphase sowie der nachfolgenden Polymerisatphasen angleichen. Darüber hinaus kann der Brechungsindex durch die vinylaromatischen Monomeren des fünfstufigen Emulsionspolymerisates auch mit demjenigen der thermoplastischen Masse abgestimmt werden.

Ferner sind im polymeren Material der ersten Schale 0,01 bis 5 Gew.-%, bevorzugt 0,1 bis 5 Gew.-% des Pfropfvernetzers Allylmethacrylat (II) enthalten. Schon sein alleiniger Zusatz führt zu einer hohen Schlagzähigkeit des fünfstufigen Endproduktes, so daß die Mitverwendung weiterer als Polymerisationsvernetzer wirkender di- oder polyfunktioneller Comonomeren (IV) nicht unbedingt notwendig ist. Ihr Anteil kann 0 bis 3 Gew.-% des Gesamtgewichtes der Monomeren der ersten Schale betragen.

Der Anteil an monofunktionellen Comonomeren (I) und (III) kann 0 bis 10 Gew.-% sein, wobei er so zu begrenzen ist, daß die Glastemperatur von 0°C in der elastomeren ersten Schale nicht überschritten wird. Als weitere III kommen

Vinylcarbazol,

Malein-, Fumar- und Itakonsäure-$C_1$- bis $C_{10}$-alkylester,

Malein-, Fumar- und Itakonsäureamid sowie deren N-Alkyl- und Dialkylderivate mit $C_1$- bis $C_{10}$-Alkylgruppen in Betracht.

Stark polare monofunktionelle Comonomere (III) wie

Acryl- und Methacrylsäure,

Acryl- und Methacrylamide,

Hydroxyalkylester und

Aminoalkylester der Acryl- und Methacrylsäure mit bis zu 8 C-Atomen werden - falls überhaupt - vorzugsweise nur in geringen Mengen in die erste Schale (b) polymerisiert.

In der dritten Polymerisationsstufe wird in Gegenwart der bereits gebildeten Kern- und Erstschalenlatices ein Monomerengemisch zu einer harten zweiten Schale (c), deren Anteil 5 bis 20 Gew.-%, vorzugsweise 5 bis 15 Gew.-% des Gesamtgewichtes des fünfstufigen Emulsionspfropfcopolymerisates beträgt, polymerisiert. Das Monomerengemisch hat eine Zusammensetzung, wie sie für das Kernmaterial (a) angegeben ist, die jedoch nicht mit dieser identisch zu sein braucht. Die Glastemperatur der zweiten Schale (c) liegt über 50°C, vorzugsweise zwischen 80 und 130°C.

In der vierten Polymerisationsstufe wird in Gegenwart der drei zuvor polymerisierten Phasen ein Monomerengemisch zu einer elastomeren dritten Schale (d) polymerisiert. Entsprechend der elastomeren ersten Schale (b) hat sie einen Anteil von 15 bis 50 Gew.-%, vorzugsweise 20 bis 45 Gew.-% am Gesamtgewicht des Pfropfpolymerisates, mit der Maßgabe, daß die Summe der elastomeren Schalen (b)

4

und (d) 50 bis 75 %, vorzugsweise 60 bis 75 Gew.-% beträgt. Die Gesamtmenge beider Schalen kann sich zu gleichen Anteilen auf die einzelnen elastomeren Polymerisatphasen verteilen.

Das eingesetzte Monomerengemisch entspricht einer Zusammensetzung gemäß der Schale (b), braucht aber mit ihr nicht identisch zu sein.

Die elastomere zweite Schale (d) hat eine Glastemperatur unter 0°C, vorzugsweise im Bereich zwischen -5 und -35°C.

In der fünften Polymerisationsstufe wird in Gegenwart der bereits gebildeten Kern- und Schalenlatices ein Monomerengemisch zu einer äußeren harten vierten Schale (e) polymerisiert. Der Anteil dieser Schale - auch äußere Hartphase genannt - an der Gesamtmenge des Emulsionspfropfcopolymerisates liegt zwischen 15 und 30 Gew.-%, vorzugsweise zwischen 15 und 25 Gew.-% und besteht aus

80 bis 99,95 Gew.-%, vorzugsweise 90 bis 98,95 Gew.-% Methylmethacrylat (I),

0,05 bis 2 Gew.-% eines Reglers (VII) und

0 bis 19,95 Gew.-%, vorzugsweise 1 bis 9,95 Gew.-% weiteren monofunktionellen Comonomeren (III), wobei unter III Acryl-$C_1$-$C_{20}$-alkylester, wie beispielsweise Acrylsäure-ethylester in einer Menge von 1 bis 6 Gew.-%, besonders bevorzugt sind. Wie in den zuvor gebildeten Hartphasen - Kern (a) und zweite Schale (c) - bewirkt ihr Zusatz eine Verbesserung der Thermostabilität.

Als Regler (VII) sind einwertige Alkylmerkaptane wie sek-Butylmerkaptan, n-Dodecylmerkaptan und t-Dodecylmerkaptan geeignet. Besonders geeignet ist n-Dodecylmerkaptan.

Die Mitverwendung eines Reglers ist von besonderer Bedeutung, da er die Kettenlänge bei der Polymerisation der Endphase begrenzt. Auf diese Weise kann das Molekulargewicht der äußeren Hartphase demjenigen der thermoplastischen Masse angepaßt werden, was besonders bei der Abmischung der Emulsionspfropfcopolymerisate mit thermoplastischen Massen von Vorteil ist.

Die Glastemperatur der äußeren Schale (e) ist größer als 50°C, bevorzugt sind 80 bis 130°C.

Die erfindungsgemäßen Emulsionspfropfcopolymerisate lassen sich in an sich bekannter Weise nach der Methodik der Emulsionspfropfpolymerisation, die auch als Saatlatex-Verfahren bezeichnet wird, in fünf aufeinanderfolgenden Stufen herstellen, wobei die Latexteilchen bis zum Abschluß der Endstufe im emulgierten Zustand verbleiben.

Durch das polymere Produkt im Saatlatex wird der Gesamtgehalt an Teilchen im fünfstufigen Endprodukt festgelegt. Das bedeutet, daß nach der ersten Polymerisationsstufe weitere Teilchen im wesentlichen nicht neu gebildet werden und der Teilchengehalt annähernd konstant bleibt.

Durch Verwendung von Emulgatoren läßt sich die Teilchengröße sowohl des Kernlatex als auch der Latexteilchen in den Zwischenstufen festlegen, wobei Emulgatorart und -konzentration bestimmend sind.

Es können anionogene und nicht ionogene Emulgatoren verwendet werden.

Geeignete Emulgatoren sind beispielsweise

Dioctylnatriumsulfosuccinat,

Nuatriumlaurylsulfat,

Natriumdodecylbenzolsulfonat,

Alkylphenoxypolyethylensulfonate und

Salze von langkettigen Carbon- und Sulfonsäuren.

Als nichtionogene Emulgatoren sind beispielsweise

Fettalkoholpolyglykolether,

Alkylarylpolyglykolether,

Fettsäuremonoethanolamide sowie

ethoxylierte Fettsäureamide und -amine

geeignet.

Bezogen auf das Gesamtgewicht des Emulsionspfropfcopolymerisates liegt die Gesamtemulgatormenge vorzugsweise bei 0,05 bis 5 Gew.-%.

Der Durchmesser der fertigen Emulsionspolymerisatteilchen wird in an sich bekannter Weise bei 50 bis 450 nm, bevorzugt bei 150 bis 300 nm eingestellt.

Als Polymerisationsinitiatoren können

Ammonium- und Alkaliperoxodisulfate wie Kaliumperoxodisulfat sowie

Initiatorkombinationssysteme wie Natriumpersulfat-Natriumhydrosulfit, Kaliumpersulfat-Natriumformaldehydsulfoxylat und Kaliumperoxodisulfat-Natriumdithionit-Eisen-II-sulfat

verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 0,5 Gew.-%, bezogen auf das fertige Emulsionspolymerisat.

Neben dem Molmassenregler, der bei der Polymerisation der äußeren harten Schale (e) verwendet wird, kann die Polymerisation des Kerns und übrigen Schalen ebenfalls in Gegenwart eines Reglers durchgeführt werden. Die Gesamtreglermenge liegt zwischen 0,01 und 1 Gew.-%, bezogen auf das Gesamtgewicht des Polymerisates.

Im allgemeinen empfiehlt es sich, den pH-Wert konstant zu halten, weswegen die Mitverwendung eines Puffers zweckmäßig ist. üblich sind Salze der Phosphorsäure, z.B. Mischungen von Kaliumdihydrogenphosphat und Dinatriumhydrogenphosphat; es können auch ammoniakalische Lösungen verwendet werden.

Die Polymerisation kann bei einer Temperatur im Bereich zwischen 70 und 100°C durchgeführt werden, wobei eine Temperatur von 85 bis 95°C bevorzugt ist. Bei Temperaturen unter 70°C verlängern sich die Polymerisationszeiten, bei Temperaturen über 100°C ist es erforderlich, die Polymerisation unter Druck durchzuführen.

Im übrigen wird das erfindungsgemäße Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann für etwa 15 bis 120 Minuten auf die Polymerisationstemperatur bringt. Auf diese Weise wird zunächst durch Emulgierung und Polymerisation des Kernmonomerengemisches der Kernlatex gebildet. Die weiteren Stufen werden jeweils unter Zulauf der Monomeren in Gegenwart der bereits gebildeten Stufe durch Emulsionspolymerisation erzeugt, wobei es zweckmäßig ist, die Monomeren zuvor unter Rühren im wäßrigen Medium zu emulgieren.

Grundsätzlich erfolgt der Zulauf einer weiteren Stufe erst dann, wenn die Polymerisation der vorhergehenden Stufe abgeschlossen ist, wodurch eine Durchmischung der einzelnen Stufen unterdrückt und ein reiner fünfstufiger Aufbau des Emulsionspfropfcopolymerisates gewährleistet wird. Dadurch kann eine Nachreaktionszeit von 15 bis 120 Minuten nach Zulaufende der jeweiligen Stufe und vor Beginn des Zulaufs der nächsten Stufe erforderlich sein.

Die Isolierung des Emulsionspolymerisates aus dem erhaltenen Latex erfolgt auf bekannte Weise durch Ausfällung, Filtration und anschließender Trocknung. Für die Ausfällung können beispielsweise
wäßrige Lösungen von anorganischen Salzen wie Natriumchlorid,
Natriumsulfat, Magnesiumsulfat und Calciumchlorid,
wäßrige Lösungen von Salzen der Ameisensäure wie Magnesiumformiat,
Calciumformiat und Zinkformiat,
wäßrige Lösungen von anorganischen Säuren wie Schwefel- und Phosphorsäure sowie
wäßrige ammoniakalische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Das getrocknete Polymerisat kann dann in Extrudern mit Acrylatharzen zu schlagzähen thermoplastischen Massen verarbeitet werden.

Ferner können Koagulation und Entwässerung des Latex direkt im Extruder erfolgen. Zur Herstellung der thermoplastischen Massen kann man den Latex auch unmittelbar im Extruder mit dem Basisharz vermischen.

Nicht nur durch Extrusion sondern auch durch andere Verarbeitungsverfahren wie Kalandrieren und Spritzgießen können die erfindungsgemäßen Emulsionspolymerisate entweder allein oder unter Abmischung mit Acrylatharzen zu schlagzähen Formkörpern, Folien und Platten verarbeitet werden. Darüber hinaus können auch andere Zusatzstoffe wie Antioxidantien, Lichtstabilisatoren, thermische Stabilisatoren, Schmiermittel, Farbstoffe und Füllstoffe mitverarbeitet werden.

Die erfindungsgemäßen Emulsionspfropfcopolymerisate werden vorzugsweise als Zusatzmittel zur Verbesserung der Schlagzähigkeit von thermoplastischen Massen auf Basis von Acrylatharzen verwendet. Derartige Acrylatharze sind im wesentlichen aus Methylmethacrylat sowie bis zu 50 Gew.-% aus weiteren Comonomeren aufgebaut. In der Hauptsache handelt es sich um monofunktionelle Monomere wie Acrylsäure-$C_1$-$C_8$-alkylester und Methacrylsäure-$C_2$-$C_8$-alkylester.

Die erfindungsgemäßen thermoplastischen Massen enthalten 5 bis 65 Gew.-% der erfindungsgemäßen Emulsionspfropfcopolymerisate. In Mengen von 15 bis 65 Gew.-% verbessern sie die Schlagzähigkeit; in geringeren Mengen verbessern sie die Bruchfestigkeit bei der Herstellung und Entformung von Spritzgußteilen.

Die neuen fünfstufigen Emulsionspfropfcopolymerisate weisen gegenüber dem Stand der Technik Vorteile auf, indem sie als Zusatzstoffe in thermoplastischen Massen die Schlagzähigkeit erhöhen, ohne dabei die mechanische Festigkeit und thermische Formbeständigkeit negativ - bei gleichzeitig gutem Aufschmelzverhalten - zu beeinflussen. Auch in Bezug auf die optischen Eigenschaften zeichnen sich die Polymerisate durch einen wesentlich geringeren Streulichtanteil und durch eine hohe Lichtdurchlässigkeit in thermoplastischen Massen aus.

Beispiele

Folgende Abkürzungen werden in den Beispielen verwendet:

| | |
|---|---|
| MMA | - Methylmethacrylat |
| $\alpha$-MeS | - $\alpha$-Methylstyrol |
| EA | - Ethylacrylat |
| n-BuA | - n-Butylacrylat |
| ALMA | - Allylmethylacryat |

Beispiele 1 bis 4

In einem Druckreaktor von 800 l Inhalt wurde jeweils eine Mischung aus den in den Tabellen 1 bis 6 angegebenen Komponenten in den ebenfalls dort ersichtlichen Mengen vorgelegt, in der Kälte unter Rühren mit Stickstoff inertisiert und dann 30 Minuten auf 95 °C erhitzt. Nach Ablauf der Polymerisation erfolgte bei 95 °C der Zulauf einer emulgierten und mit Stickstoff inertisierten zweiten Mischung (siehe Tabellen 1 bis 6) in den Reaktor. In der gleichen Weise wurden nach der Polymerisation die weiteren Zuläufe in den Reaktor dosiert. Die einzelnen Zulauf- und Polymerisationszeiten bei 95 °C sind den Tabellen zu entnehmen.

Die Emulsionspfropfcopolymerisate wurden aus den Latices ausgefällt, isoliert, gewaschen und getrocknet.

Beispiele 5 und 6

In einem Reaktionsgefäß von 10 l Inhalt wurde jeweils eine Mischung aus den in den Tabellen 5 und 6 angegebenen Komponenten in den ebenfalls dort ersichtlichen Mengen vorgelegt, in der Kälte unter Rühren mit Stickstoff inertisiert und dann 180 bzw. 80 Minuten 85 bis 95 °C erhitzt. Anschließend wurden die Polymerisation sowie die Weiterverarbeitung entsprechend den Beispielen 1 bis 4 durchgeführt.

Für die anschließende Qualitätsprüfung wurden Probekörper aus Granulaten gefertigt, die aus 39 Gew.-% des Emulsionspfropfcopolymerisates und 61 Gew.-% eines Acrylatharzes mit einem mittleren Molekulargewicht von 105 000 aus 99 Gew.-% Methylmethacrylat und 1 Gew.-% Methylacrylat hergestellt worden waren.

Zur Qualitätsprüfung der Abmischungen wurden die folgenden Eigenschaften bestimmt:
- Schlagzähigkeit nach DIN 53 453
- Lichtdurchlässigkeit nach DIN 5036 (6 mm)
- Trübung nach DIN 5036 (6 mm)
- Reißdehnung nach DIN 53 455
- Reißfestigkeit nach DIN 53 455
- Zugfestigkeit nach DIN 53 455
- Vicat-Erweichungstemperatur nach DIN 53 460 (Methode B/50)
- Aufschmelzverhalten

Die Prüfung der Schlagzähigkeit erfolgte nach dem Charpy-Verfahren. Bei diesem Prüfungsverfahren wird ein auf zwei Stützen ruhender normierter Probekörper durch Auftreffen eines in seine Mitte zielenden Aufschlags zerstört oder geschädigt. Die für die Zerstörung bzw. Schädigung benötigte Arbeit (kJ) wird auf den kritischen Querschnitt ($m^2$) bezogen und als Schlagzähigkeit (Dimension $kJ/m^2$) bezeichnet.

Als Lichtdurchlässigkeit oder Transmission (Dimension %) bezeichnet man das Verhältnis des von einer Probe durchgelassenen Lichtes zur Intensität des einfallenden Lichtes. Sie wurde in Abhängigkeit von der Wellenlänge in einem Bereich von 400 bis 900 nm an einem Probekörper mit einer Dicke von 6 mm bestimmt.

Durchsichtige Kunststoffe, bei denen die optische Klarheit für den Gebrauchswert wesentlich ist, werden auf ihre Trübung untersucht. Als Trübung oder Streulichtanteil (Dimension %) bezeichnet man den Teil des von einer Materialprobe durchgelassenen Lichtes, der von der Richtung des auf die Probe einfallenden Lichtstrahls aufgrund einer im Material stattfindenden Streuung abweicht. Die Trübung wurde an einem Probekörper mit einer Dicke von 6 mm bestimmt.

Die Reißdehnung $\epsilon_R$ (Dimension %) wird aus der Längenänderung $\Delta L_R$ in mm bei der Reißkraft und der ursprünglichen Meßlänge $L_o$ des Probekörpers in mm nach der Beziehung bestimmt:

$$\varepsilon_R = \frac{\Delta L_R}{L_0} \cdot 100$$

Die Reißfestigkeit (Dimension N/mm$^2$) ist die Zugspannung im Augenblick des Reißens. Unter Zugspannung wird die auf den kleinsten Anfangsquerschnitt des Probekörpers bezogene Kraft zu jedem Zeitpunkt des Versuches verstanden.

Die Zugfestigkeit (Dimension N/mm$^2$) ist die maximale Zugspannung des Probekörpers während des Zugversuches, durch den eine steigende Verformung der Probe bis zum Bruch in Richtung der Längsachse durchgeführt wird.

Mittels der Erweichungstemperatur (Dimension °C) läßt sich die Formbeständigkeit von Kunststoffen in der Wärme charakterisieren. Unter der Vicat-Erweichungstemperatur, die nach dem Vicat-Verfahren B/50 ermittelt wurde, versteht man diejenige Temperatur, bei der ein bestimmter Eindringkörper (Stahlstift mit kreisförmigem Querschnitt von 1 mm$^2$) unter einer Kraft von 49,05 N und einer Temperatursteigerung von 50 K/h 1 mm tief senkrecht in den Probekörper eindringt.

Über das Aufschmelzverhalten lassen sich qualitative Aussagen zur Schmelzbarkeit einer Probe treffen. Sie wird dazu in einem Reagenzglas unter Stickstoff auf ca. 280°C erhitzt. Bildet sich ein Schmelzbrei, der bei dieser Temperatur ein gutes Fließverhalten zeigt, so kann auf eine gute Verarbeitungsfähigkeit des Materials geschlossen werden.

Die Ergebnisse der einzelnen Qualitätsprüfungen sind der Tabelle 7 zu entnehmen. Sie zeigen, daß die erfindungsgemäßen Emulsionspfropfcopolymerisate in ihren mechanischen, thermischen und optischen Eigenschaften den aus dem Stand der Technik bekannten Emulsionspolymerisaten überlegen sind.

Beispiel 1

Tabelle 1: 5-stufiges Emulsionspfropfcopolymerisat

| Stoffkomponenten (kg) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 120,000 | 45,000 | 18,000 | 80,000 | 37,000 |
| Dioctylnatriumsulfosuccinat | 0,650 | 0,085 | 0,110 | 0,170 | 0,210 |
| Kaliumperoxodisulfat | 0,075 | 0,055 | 0,015 | 0,100 | 0,030 |
| 25 %ige wäßrige Ammoniaklösung | 0,060 | 0,045 | 0,020 | 0,080 | 0,030 |
| MMA | 8,000 | – | 19,500 | – | 39,000 |
| EA | 0,330 | – | 0,930 | – | 1,860 |
| n–BuA | – | 35,370 | – | 70,740 | – |
| Styrol | – | 7,765 | – | 15,525 | – |
| ALMA | 0,026 | 0,885 | 0,025 | 1,770 | – |
| n–Dodecylmerkaptan | – | – | – | – | 0,241 |
| Zulaufzeit bei 95°C (min) | – | 90 | 30 | 105 | 45 |
| Polymerisationszeit bei 95°C (min) | 30 | 45 | 30 | 60 | 15 |

EP 0 512 333 B1

Beispiel 2

Tabelle 2: 5-stufiges Emulsionspfropfcopolymerisat

| Stoffkomponenten (kg) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 120,000 | 62,500 | 18,000 | 62,500 | 37,000 |
| Dioctylnatriumsulfosuccinat | 0,650 | 0,130 | 0,110 | 0,130 | 0,210 |
| Kaliumperoxodisulfat | 0,075 | 0,080 | 0,015 | 0,080 | 0,030 |
| 25 %ige wäßrige Ammoniaklösung | 0,060 | 0,060 | 0,020 | 0,060 | 0,030 |
| MMA | 8,000 | - | 19,500 | - | 39,000 |
| EA | 0,330 | - | 0,930 | - | 1,860 |
| n-BuA | - | 53,055 | - | 53,055 | - |
| Styrol | - | 11,645 | - | 11,645 | - |
| ALMA | 0,026 | 1,330 | 0,025 | 1,330 | - |
| n-Dodecylmerkaptan | - | - | - | - | 0,241 |
| Zulaufzeit bei 95°C (min) | - | 95 | 30 | 100 | 45 |
| Polymerisationszeit bei 95°C (min) | 30 | 45 | 30 | 60 | 15 |

Beispiel 3

Tabelle 3: 5-stufiges Emulsionspfropfcopolymerisat

| Stoffkomponenten (kg) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 120,000 | 80,000 | 18,000 | 45,000 | 37,000 |
| Dioctylnatriumsulfosuccinat | 0,650 | 0,170 | 0,110 | 0,085 | 0,210 |
| Kaliumperoxodisulfat | 0,075 | 0,100 | 0,015 | 0,055 | 0,030 |
| 25 %ige wäßrige Ammoniaklösung | 0,060 | 0,080 | 0,020 | 0,045 | 0,030 |
| MMA | 8,000 | – | 19,500 | – | 39,000 |
| EA | 0,330 | – | 0,930 | – | 1,860 |
| n-BuA | – | 70,740 | – | 35,370 | – |
| Styrol | – | 15,525 | – | 7,765 | – |
| ALMA | 0,026 | 1,770 | 0,025 | 0,885 | – |
| n-Dodecylmerkaptan | – | – | – | – | 0,241 |
| Zulaufzeit bei 95°C (min) | – | 105 | 30 | 90 | 45 |
| Polymerisationszeit bei 95°C (min) | 30 | 60 | 30 | 45 | 15 |

EP 0 512 333 B1

Beispiel 4 (Vergleichsbeispiel)

Tabelle 4: 3-stufiges Emulsionspfropfcopolymerisat

| Stoffkomponenten (kg) | Vorlage (1. Stufe) | Zulauf 1 (2. Stufe) | Zulauf 2 (3. Stufe) |
|---|---|---|---|
| vollentsalztes Wasser | 160,000 | 40,000 | 95,000 |
| Dioctylnatriumsulfosuccinat | 1,010 | 0,400 | 0,490 |
| Kaliumperoxodisulfat | 0,100 | 0,040 | 0,040 |
| 25 %ige wäßrige Ammoniaklösung | 0,080 | 0,030 | 0,030 |
| | | | |
| MMA | 38,750 | – | 67,630 |
| EA | 1,615 | – | 2,830 |
| n-BuA | – | 72,700 | – |
| Styrol | – | 15,950 | – |
| ALMA | 0,040 | 1,820 | – |
| n-Dodecylmerkaptan | – | – | 0,300 |
| | | | |
| Zulaufzeit bei 95°C (min) | – | 90 | 120 |
| Polymerisationszeit bei 95°C (min) | 30 | 120 | 60 |

EP 0 512 333 B1

Beispiel 5 (Vergleichsbeispiel)

Tabelle 5: 5-stufiges Emulsionspfropfcopolymerisat

| Stoffkomponenten (g) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 2168,00 | 620,00 | 620,00 | 620,00 | 620,00 |
| Dioctylnatriumsulfosuccinat | 47,94 | 1,23 | 3,30 | 1,20 | 3,20 |
| Kaliumperoxodisulfat | 5,54 (+ 1,90)* | 0,74 | 0,74 | 0,68 | 0,74 |
| MMA | 461,80 | – | 453,10 | – | 431,20 |
| $\alpha$-MeS | 153,70 | – | 151,20 | – | 151,00 |
| EA | – | – | – | – | 30,80 |
| n-BuA | – | 597,50 | – | 597,50 | – |
| Styrol | – | – | – | – | – |
| ALMA | 3,10 | 18,48 | 11,70 | 18,48 | – |
| n-Dodecylmerkaptan | – | – | – | – | 3,08 |
| Zulaufzeit bei 95°C (min) | – | 70 | 105 | 60 | 70 |
| Polymerisationszeit bei 80 – 95°C (min) | 180 | – | – | – | – |
| Polymerisationszeit bei 95°C (min) | – | 45 | 75 | 70 | 240 |

* Nachdosierung zur Umsatzsteigerung

Beispiel 6 (Vergleichsbeispiel)

Tabelle 6: 5-stufiges Emulsionspfropfcopolymerisat

| Stoffkomponenten (g) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 1930,00 | 920,00 | 310,00 | 920,00 | 620,00 |
| Dioctylnatriumsulfosuccinat | 23,97 | 1,85 | 0,62 | 1,85 | 3,20 |
| Kaliumperoxodisulfat | 2,77 | 1,11 | 0,37 | 1,02 | 0,74 |
| MMA | 246,40 | – | 246,40 | – | 492,80 |
| $\alpha$-MeS | 61,50 | – | 61,50 | – | 92,40 |
| EA | – | – | – | – | 27,70 |
| n-BuA | – | 822,40 | – | 822,40 | – |
| Styrol | – | 92,40 | – | 92,40 | – |
| ALMA | 0,15 | 9,24 | 0,15 | 9,24 | – |
| n-Dodecylmerkaptan | – | – | – | – | 3,08 |
| Zulaufzeit bei 95°C (min) | – | 100 | 55 | 90 | 75 |
| Polymerisationszeit bei 85 - 95°C (min) | 80 | – | – | – | – |
| Polymerisationszeit bei 95°C (min) | – | 45 | 105 | 70 | 60 |

EP 0 512 333 B1

Tabelle 7

| Prüfergebnisse von Probekörpern aus Abmischungen aus 39 Gew.-% Emulsionspfropfcopolymerisat und 61 Gew.-% eines Acrylatharzes aus 99 Gew.-% Methylmethacrylat und 1 Gew.-% Methylacrylat | | | | | | | |
|---|---|---|---|---|---|---|---|
| Eigenschaften | Einheit | Emulsionspfropfcopolymerisat aus Beispiel | | | | | |
| | | 1 | 2 | 3 | 4 | 5 | 6 |
| Schlagzähigkeit | $kJ/m^2$ | 81 | 70 | 68 | 68 | 26 | 51 |
| Lichtdurchlässigkeit | % | 91 | 91 | 91 | 87 | 84 | 77 |
| Trübung | % | 2,7 | 2,9 | 2,6 | 4,5 | 8,4 | 15,4 |
| Reißdehnung | % | 50 | 45 | 42 | 40 | 10 | 13 |
| Reißfestigkeit | $N/mm^2$ | 35 | 36 | 38 | 36 | 63 | 51 |
| Zugfestigkeit | $N/mm^2$ | 40 | 42 | 44 | 42 | 68 | 57 |
| Vicat-Erweichungstemperatur | °C | 95 | 94 | 93 | 92 | - | 97 |
| Aufschmelzverhalten | - | gut | gut | sehr gut | gut | schlecht | schlecht |

**Patentansprüche**

1. Emulsionspfropfcopolymerisate, aufgebaut aus
    a) 2 bis 10 Gew.-% eines Kerns aus
        80 bis 99,99 Gew.-% Methylmethacrylat (I),
        0,01 bis 5 Gew.-% Allylmethacrylat (II),
        0 bis 19,99 Gew.-% weiteren monofunktionellen Comonomeren (III) und
        0 bis 3 Gew.-% weiteren di- oder polyfunktionellen Comonomeren (IV),
    b) 15 bis 50 Gew.-% einer ersten Schale aus
        60 bis 89,99 Gew.-% eines Acrylsäure-$C_1$-$C_{20}$-alkylesters (V),
        10 bis 39,99 Gew.-% eines vinylaromatischen Monomeren (VI),
        0,01 bis 5 Gew.-% II,
        0 bis 10 Gew.-% I und/oder III,
        0 bis 3 Gew.-% IV,
    c) 5 bis 20 Gew.-% einer zweiten Schale in einer unter (a) angegebenen Zusammensetzung,
    d) 15 bis 50 Gew.-% einer dritten Schale in einer unter (b) angegebenen Zusammensetzung,
    e) 15 bis 30 Gew.-% einer vierten Schale aus
        80 bis 99,95 Gew.-% I,
        0,05 bis 2 Gew.-% eines Reglers (VII) und
        0 bis 19,95 Gew.-% III,
    mit der Maßgabe, daß die Summe der Anteile der Schalen (b) und (d) 50 bis 75 Gew.-% beträgt.

2. Verfahren zur Herstellung von Emulsionspfropfcopolymerisaten gemäß Anspruch 1 mit einem harten Kern und alternierend weichen und harten Schalen in an sich bekannter Weise, dadurch gekennzeichnet, daß man
    a) 2 bis 10 Gew.-% eines Monomerengemisches aus
        80 bis 99,99 Gew.-% Methylmethacrylat (I),
        0,01 bis 5 Gew.-% Allylmethacrylat (II),
        0 bis 19,99 Gew.-% weiteren monofunktionellen Comonomeren (III) und
        0 bis 3 Gew.-% weiteren di- oder polyfunktionellen Comonomeren (IV),
    b) 15 bis 50 Gew.-% eines Monomerengemisches aus
        60 bis 89,99 Gew.-% eines Acrylsäure-$C_1$-$C_{20}$-alkylesters (V),
        10 bis 39,99 Gew.-% eines vinylaromatischen Monomeren (VI),
        0,01 bis 5 Gew.-% II,
        0 bis 10 Gew.-% I und/oder III,
        0 bis 3 Gew.-% IV,
    c) 5 bis 20 Gew.-% eines Monomerengemisches in einer unter (a) angegebenen Zusammensetzung,
    d) 15 bis 50 Gew.-% eines Monomerengemisches in einer unter (b) angegebenen Zusammensetzung,

e) 15 bis 30 Gew.-% eines Monomerengemisches aus

80 bis 99,95 Gew.-% I,

0,05 bis 2 Gew.-% eines Reglers (VII) und

0 bis 19,95 Gew.-% III

nacheinander der Polymerisation zuführt.

3. Verwendung der Emulsionspfropfcopolymerisate gemäß Anspruch 1 als Zusätze zur Erhöhung der Schlagzähigkeit von thermoplastischen Massen.

4. Thermoplastische Massen, enthaltend 5 bis 65 Gew.-% Emulsionspfropfcopolymerisate gemäß Anspruch 1 als Mittel zur Erhöhung der Schlagzähigkeit.

5. Formkörper und Flächengebilde aus den thermoplastischen Massen gemäß Anspruch 4.

**Claims**

1. An emulsion graft copolymer composed of

a) 2-10% by weight of a core composed of

80 - 99.99% by weight of methyl methacrylate (I),

0.01 - 5 % by weight of allyl methacrylate (II),

0 - 19.99% by weight of other monofunctional comonomers (III) and

0 - 3% by weight of other di- or polyfunctional comonomers (IV),

b) 15-50% by weight of a first shell composed of

60 - 89.99% by weight of a $C_1$-$C_{20}$-alkyl acrylate (V),

10 - 39.99% by weight of a vinylaromatic monomer (VI),

0.01 - 5 % by weight of II,

0 - 10% by weight of I and/or III,

0 - 3% by weight of IV,

c) 5-20% by weight of a second shell with a composition as indicated under (a),

d) 15-50% by weight of a third shell with a composition as indicated under (b),

e) 15-30% by weight of a fourth shell composed of

80 - 99.95% by weight of I,

0.05 - 2% by weight of a regulator (VII) and

0 - 19.95% by weight of III,

with the proviso that the total of the contents of the shells (b) and (d) is 50-75% by weight.

2. A process for preparing emulsion graft copolymers as claimed in claim 1 with a hard core and alternate soft and hard shells in a conventional manner, which comprises introducing

a) 2-10% by weight of a monomer mixture composed of

80 - 99.99% by weight of methyl methacrylate (I),

0.01 - 5 % by weight of allyl methacrylate (II),

0 - 19.99% by weight of other monofunctional comonomers (III) and

0 - 3% by weight of other di- or polyfunctional comonomers (IV),

b) 15-50% by weight of a monomer mixture composed of

60 - 89.99% by weight of a $C_1$-$C_{20}$-alkyl acrylate (V),

10 - 39.99% by weight of a vinylaromatic monomer (VI),

0.01 - 5 % by weight of II,

0 - 10% by weight of I and/or III,

0 - 3% by weight of IV,

c) 5-20% by weight of a monomer mixture with a composition as indicated under (a),

d) 15-50% by weight of a monomer mixture with a composition as indicated under (b),

e) 15-30% by weight of a monomer mixture composed of

80 - 99.95% by weight of I,

0.05 - 2% by weight of a regulator (VII) and

0 - 19.95% by weight of III,

successively into the polymerization.

3. The use of emulsion graft compolymers as claimed in claim 1 as additives for increasing the impact strength of thermoplastic compositions.

4. A thermoplastic composition containing 5-65% by weight of emulsion graft copolymer as claimed in claim 1 to increase the impact strength.

5. A molding or flat material composed of a thermoplastic composition as claimed in claim 4.

**Revendications**

1. Produits de copolymérisation par greffage en émulsion, composés de
   a) 2 à 10% en poids d'un noyau de
      80 à 99,99% en poids de méthacrylate de méthyle (I),
      0,01 à 5 % en poids de méthacrylate d'allyle (II),
      0 à 19,99% en poids d'autres comonomères monofonctionnels (III) et
      0 à 3 % en poids d'autres comonomères bi- ou polyfonctionnels (IV),
   b) 15 à 50% en poids d'une première enveloppe de
      60 à 89,99% en poids d'un ester alkylique en $C_1$-$C_{20}$ d'acide acrylique (V),
      10 à 39,99% en poids d'un monomère vinylaromatique (VI),
      0,01 à 5 % en poids de II,
      0 à 10 % en poids de I et/ou III,
      0 à 3 % en poids de IV,
   c) 5 à 20% en poids d'une deuxième enveloppe ayant la composition indiquée en (a),
   d) 15 à 50% en poids d'une troisième enveloppe ayant la composition indiquee en (b),
   e) 15 à 30% en poids d'une quatrième enveloppe de
      80 à 99,95% en poids de I,
      0,05 à 2 % en poids d'un régulateur (VII) et
      0 à 19,95% en poids de III,
   étant spécifié que la somme des parts des enveloppes (b) et (d) est comprise entre 50 et 75% en poids.

2. Procédé de préparation de produits de copolymérisation par greffage en émulsion selon la revendication 1, comportant un noyau dur et des enveloppes alternativement molles et dures de façon connue en soi, caractérisé en ce qu'on introduit successivement dans la polymérisation
   a) 2 à 10% en poids d'un mélange de monomères composé de
      80 à 99,99% en poids de méthacrylate de méthyle (I),
      0,01 à 5 % en poids de méthacrylate d'allyle (II),
      0 à 19,99% en poids d'autres comonomères monofonctionnels (III) et
      0 à 3 % en poids d'autres comonomères bi- ou polyfonctionnels (IV),
   b) 15 à 50% en poids d'un mélange de monomères composé de
      60 à 89,99% en poids d'un ester alkylique en $C_1$-$C_{20}$ d'acide acrylique (V),
      10 à 39,99% en poids d'un monomère vinylaromatique (VI),
      0,01 à 5 % en poids de II,
      0 à 10 % en poids de I et/ou III,
      0 à 3 % en poids de IV,
   c) 5 à 20% en poids d'un mélange de monomères ayant la composition indiquee en (a),
   d) 15 à 50% en poids d'un mélange de monomères ayant la composition indiquée en (b),
   e) 15 à 30% en poids d'un mélange de monomères composé de
      80 à 99,95% en poids de I,
      0,05 à 2 % en poids d'un régulateur (VII) et
      0 à 19,95% en poids de III,

3. Utilisation des produits de copolymérisation par greffage en émulsion selon la revendication 1 comme additifs pour accroître la résilience de masses thermoplastiques.

4. Masses thermoplastiques, contenant 5 à 65% en poids de produits de copolymérisation par greffage en émulsion selon la revendication 1 en tant qu'agents destinés à accroître la résilience.

5. Corps moulés et objets plats, formés à partir des masses thermoplastiques selon la revendication 4.